# EUROPEAN PATENT APPLICATION

(11) **EP 4 694 381 A1**
(43) Date of publication of application: **11.02.2026**
(21) Application number: 24853731.8
(22) Date of filing: 12.08.2024
(51) Int. Cl.: H04W 52/02

(54) **NETWORK CONNECTION METHOD AND SYSTEM, AND RELATED APPARATUS**

(30) Priority: 14.08.2023 CN 202311023846
(71) Applicant: Huawei Technologies Co., Ltd., Shenzhen, Guangdong 518129 (CN)
(72) Inventor: LI, Bing, Shenzhen, Guangdong 518129 (CN); CHEN, Deming, Shenzhen, Guangdong 518129 (CN); FANG, Shuailei, Shenzhen, Guangdong 518129 (CN); DUAN, Qian, Shenzhen, Guangdong 518129 (CN); WANG, Xiangyang, Shenzhen, Guangdong 518129 (CN); XU, Bei, Shenzhen, Guangdong 518129 (CN); ZHANG, Wei, Shenzhen, Guangdong 518129 (CN)
(74) Representative: MERH-IP Matias Erny Reichl Hoffmann Patentanwälte PartG mbB
(86) International application number: PCT/CN2024/111412
(87) International publication number: WO 2025/036322

(57) **Abstract**

This application discloses a network connection method, a system, and a related apparatus. A first electronic device establishes a Wi-Fi connection to a network connection device by using a wireless fidelity Wi-Fi module. The Wi-Fi module is disabled when it is detected that a quantity of occurrences of wake-up events in a first time period is greater than a first quantity of times, and the first electronic device is in a low power mode. The wake-up event is an event that when the first electronic device receives a data packet through the Wi-Fi connection, an interrupt controller is triggered to wake up the first electronic device from a sleep state to a working state. In this way, power consumption caused by frequent wake-up in a low power mode can be avoided.

## Description

This application claims priority to Chinese Patent Application No. 202311023846.2, filed with the China National Intellectual Property Administration on August 14, 2023 and entitled "NETWORK CONNECTION METHOD, SYSTEM, AND RELATED APPARATUS", which is incorporated herein by reference in its entirety.

### TECHNICAL FIELD

This application relates to the field of communication technologies, and in particular, to a network connection method, a system, and a related apparatus.

### BACKGROUND

With continuous development of communication technologies, wireless fidelity (wireless fidelity, Wi-Fi) chips are integrated into an increasing quantity of wearable devices, which are enabled to connect to a Wi-Fi network.

However, in the Wi-Fi network, the wearable device usually receives a multicast packet, a unicast packet, a broadcast packet, and the like from the Wi-Fi network. These data packets generally do not relate to a specific service but keep a system of the wearable device in a running state for a long time, causing power consumption of the wearable device to be excessively high.

### SUMMARY

This application provides a network connection method, a system, and a related apparatus, to reduce power consumption of a first electronic device by disabling a wireless fidelity Wi-Fi module when the first electronic device is in a low power mode, and keeping the Wi-Fi module in an enabled state when the first electronic device is in a non-low power mode.

According to a first aspect, this application provides a network connection method, applied to a first electronic device. The method includes: establishing a Wi-Fi connection to a network connection device by using a wireless fidelity Wi-Fi module; and disabling the Wi-Fi module when it is detected that a quantity of occurrences of wake-up events in a first time period is greater than a first quantity of times, and the first electronic device is in a low power mode. The wake-up event is an event that when the first electronic device receives a data packet through the Wi-Fi connection, an interrupt controller is triggered to wake up the first electronic device from a sleep state to a working state.

In this way, power consumption caused by frequently waking up the electronic device in the low power mode can be avoided.

In some possible implementations, the sleep state of the first electronic device is a state in which the first electronic device stops supplying power to a central processing unit CPU of the first electronic device, and the working state of the first electronic device is a state in which the first electronic device supplies power to the CPU.

In some possible implementations, the method further includes: disabling the Wi-Fi module when it is detected that the first electronic device remains screen-off and is not worn by a user for first duration, and the first electronic device is in the low power mode.

In this way, the Wi-Fi module can be disabled when the device is not worn, to reduce power consumption.

In some possible implementations, the method further includes: disabling the Wi-Fi module when it is detected that wake lock duration of the Wi-Fi module reaches second duration, and the first electronic device is in the low power mode.

In this way, power consumption caused by long wake lock for Wi-Fi can be avoided.

In some possible implementations, the detection that the first electronic device is in the low power mode specifically includes: detecting that a power level of the first electronic device is less than a power level threshold; or detecting that the first electronic device is in a screen-off state; or detecting that the first electronic device does not execute a service or a service that is being executed is not a perceptible service, where the perceptible service includes a download service, a music service, a video service, a call service, and a network keepalive service applied by an application in a first list.

In some possible implementations, after disabling the Wi-Fi module, the method further includes: enabling the Wi-Fi module when it is detected that an enabling condition is met; and the enabling condition includes any one or more of the following: the first electronic device is in a charging state and the power level is greater than the power level threshold, an application in the first list applies for the network keepalive service, an operation performed by a user on a key is received, the first electronic device is in a screen-on state and receives a touch operation of a user, or an operation of pulling down a shortcut menu by a user is received.

In this way, when the enabling condition is met, the first electronic device may re-enable the Wi-Fi module.

In some possible implementations, the method further includes: when the Wi-Fi connection to the network connection device is established by using the Wi-Fi module, establishing a communication connection to the second electronic device, where the second electronic device is used for communication between the first electronic device and a third electronic device; and disabling the Wi-Fi module after the communication connection to the second electronic device is established.

In this way, the first electronic device can communicate with the third electronic device through the second electronic device. In addition, power consumption can be reduced by disabling the Wi-Fi module.

In some possible implementations, the communication connection between the first electronic device and the second electronic device includes: a Bluetooth connection, a near field communication NFC connection, and an infrared IR connection.

In some possible implementations, disabling the Wi-Fi module after the communication connection to the second electronic device is established specifically includes: after the communication connection to the second electronic device is established, receiving network connection information sent by the second electronic device, where the network connection information includes any one or more of the following: a network status, an operating system identifier, or a power status; and disabling the Wi-Fi module when it is determined, based on the network connection information, that the second electronic device supports the first electronic device in communicating with the third electronic device through the second electronic device.

In this way, the first electronic device may determine, based on the network connection information, whether the second electronic device supports the first electronic device in communicating with the third electronic device through the second electronic device.

In some possible implementations, disabling the Wi-Fi module after the communication connection to the second electronic device is established specifically includes: after the communication connection to the second electronic device is established, receiving a first notification sent by the second electronic device, where the first notification indicates that the second electronic device supports the first electronic device in communicating with the third electronic device through the second electronic device; and disabling the Wi-Fi module after the first notification is received.

In this way, the second electronic device may determine whether communication between the first electronic device and the third electronic device is supported, and send a determining result to the first electronic device.

In some possible implementations, the method further includes: after the communication connection to the second electronic device is established and the Wi-Fi module is disabled, detecting that a network data transmission speed between the first electronic device and the second electronic device is lower than a first speed; and enabling the Wi-Fi module.

In this way, if the first electronic device detects that the network data transmission speed is low, the first electronic device may enable the Wi-Fi module.

In some possible implementations, the method further includes: after the communication connection to the second electronic device is established and the Wi-Fi module is disabled, receiving a second notification sent by the second electronic device, where the second notification indicates that the second electronic device does not support the first electronic device in communicating with the third electronic device through the second electronic device; and enabling the Wi-Fi module after the second notification is received.

In this way, the Wi-Fi module can be enabled when the second electronic device does not support the communication between the first electronic device and the third electronic device.

In some possible implementations, the method further includes: after the Wi-Fi module is disabled, sending a first request for a first service to the second electronic device, where the first request includes a first address, and the first request is used to request the second electronic device to obtain first data based on the first address; receiving a third notification sent by the second electronic device, where the third notification indicates that the second electronic device cannot obtain the first data; enabling the Wi-Fi module after the third notification is received; establishing the Wi-Fi connection to the network connection device by using the Wi-Fi module; and obtaining the first data based on the first address through the Wi-Fi connection.

In this way, when the second electronic device cannot obtain the first data, the first electronic device may enable the Wi-Fi module to obtain the first data. That the second electronic device cannot obtain the first data may include a case that the second electronic device cannot obtain the first data currently.

In some possible implementations, enabling the Wi-Fi module after the third notification is received specifically includes: after the third notification is received, enabling the Wi-Fi module when it is detected that a priority of the first service is greater than or equal to a priority threshold.

In this way, when the priority of the first service is relatively high, the first electronic device may enable the Wi-Fi module to execute the first service.

In some possible implementations, the method further includes: after the Wi-Fi module is disabled, establishing a communication connection to a second electronic device; and sending data to a third electronic device through the second electronic device, or receiving, through the second electronic device, data sent by the third electronic device.

In this way, after the first electronic device disables the Wi-Fi module, the first electronic device may alternatively communicate with the third electronic device through the second electronic device. The third electronic device may be the foregoing network connection device, or may be another electronic device.

According to a second aspect, this application provides an electronic device, which is a first electronic device. The first electronic device includes one or more processors and one or more memories. The one or more memories are coupled to the one or more processors. The one or more memories are configured to store computer program code. The computer program code includes computer instructions. When the one or more processors execute the computer instructions, a communication apparatus is enabled to perform the network connection method in any possible implementation of either of the foregoing aspects.

According to a third aspect, an embodiment of this application provides a computer storage medium, including computer instructions. When the computer instructions are run on a first electronic device, the first electronic device is enabled to perform the network connection method in any possible implementation of either of the foregoing aspects.

According to a fourth aspect, an embodiment of this application provides a computer program product. When the computer program product runs on the foregoing first electronic device, the first electronic device is enabled to perform the network connection method in any possible implementation of either of the foregoing aspects.

For beneficial effect of the second aspect to the fourth aspect, refer to the beneficial effect of the first aspect.

### BRIEF DESCRIPTION OF DRAWINGS

FIG. 1A is a diagram of a system architecture of a network connection system 10 according to an embodiment of this application;
FIG. 1B is a diagram of a hardware structure of an electronic device 100 according to an embodiment of this application;
FIG. 2 is a flowchart of a network connection method according to an embodiment of this application;
FIG. 3 is a flowchart of a network connection method according to an embodiment of this application;
FIG. 4 is a flowchart of a network connection method according to an embodiment of this application;
FIG. 5 is a flowchart of a network connection method according to an embodiment of this application;
FIG. 6 is a flowchart of a network connection method according to an embodiment of this application; and
FIG. 7 is a diagram of functional modules of an electronic device 100 according to an embodiment of this application.

### DESCRIPTION OF EMBODIMENTS

The following clearly describes technical solutions in embodiments of this application in detail with reference to the accompanying drawings. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may indicate the following three cases: Only A exists, both A and B exist, and only B exists. In addition, in the descriptions of embodiments of this application, "plurality" means two or more.

The following terms "first" and "second" are merely used for description, and shall not be understood as an indication or implication of relative importance or an implicit indication of a quantity of indicated technical features. Therefore, a feature limited by "first" or "second" may explicitly or implicitly include one or more of the features. In the descriptions of embodiments of this application, unless otherwise specified, "a plurality of" means two or more.

A term "user interface (user interface, UI)" in the following embodiments of this application is a medium interface for interaction and information exchange between an application program or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of a graphical user interface (graphic user interface, GUI), which is a user interface displayed in a graphical mode and related to a computer operation. The user interface may be a visual interface element such as a text, an icon, a button, a menu, a tab, a text box, a dialog box, a status bar, a navigation bar, or a Widget that is displayed on a display of the electronic device.

The following describes some terms in embodiments of this application.

Wireless fidelity (wireless fidelity, Wi-Fi) technology: Wi-Fi technology is the most widely used wireless network transmission technology nowadays. Wi-Fi, as a trademark held by the Wi-Fi Alliance for use in brand certification for products, is a wireless local area network technology based on the IEEE 802.11 standard. Wi-Fi is often regarded as a synonym of IEEE 802.11 standard as the two systems are closely related.

Sleep state: When an electronic device does not receive an operation of a user for a period of time, the electronic device may temporarily stop supplying power to a central processing unit (central processing unit, CPU), to reduce power consumption of the electronic device. A state in which the electronic device temporarily stops supplying power to the central processing unit may be referred to as a sleep state.

Working state: A state in which the electronic device supplies power to the central processing unit may be referred to as a working state.

Wi-Fi wake-up: Wi-Fi wake-up refers to waking up the electronic device from the sleep state to the working state by using a Wi-Fi signal. Specifically, in a case that the electronic device is in the sleep state, when receiving a Wi-Fi signal, the electronic device may use an interrupt controller to wake up the electronic device from the sleep state to the working state (that is, supply power to the CPU again).

Long wake lock function of Wi-Fi: Long wake lock (also referred to as long wake-lock) ensures that Wi-Fi-related services are not terminated due to system sleep and prevents a system from entering a sleep state. In addition, long wake lock may be further used to maintain a function of a connection between a service and a peer device specified by the service. For some services of the electronic device, to ensure user experience, the services need to continuously communicate with a peer device through a network connection in a period of time when being executed. In this period of time, the service can use the long wake lock function of Wi-Fi to ensure the connection between the service and the peer device.

Network keepalive: Network keepalive is a function used to maintain a connection between an application (briefly referred to as application below) and a peer device specified by the application. An application installed on the electronic device may apply to the electronic device for network keepalive. After detecting that an application applies for network keepalive, the electronic device may maintain a connection between the application and a peer device (for example, a server), where the peer device is a device specified by the application. Through network keepalive, the application can perform operations such as real-time data transmission and receiving a push notification, without being automatically closed by the system or disconnected from the peer device.

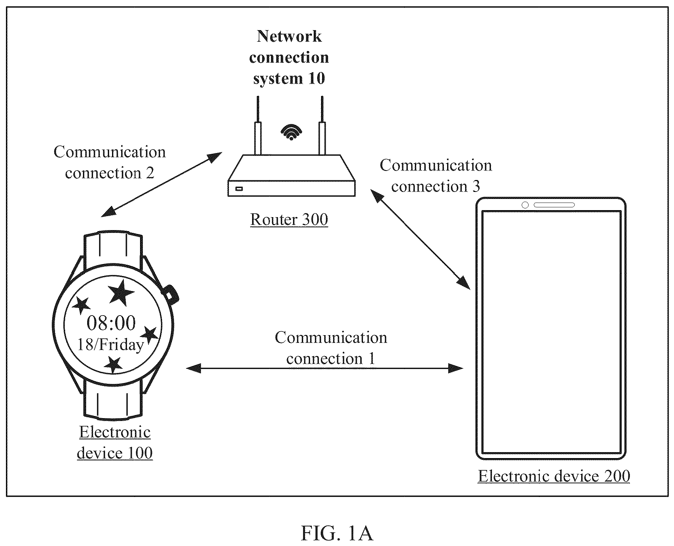

FIG. 1A is a diagram of a system architecture of a network connection system 10 according to an embodiment of this application.

As shown in FIG. 1A, the network connection system 10 may include an electronic device 100, an electronic device 200, and a network connection device. The network connection device may be a router 300.

Both the electronic device 100 and the electronic device 200 may access a network by using the router 300. In this embodiment of this application, the network accessed by the electronic device 100 by using the router 300 may be a global Internet, that is, a huge network system formed by interconnection of computer networks around the world. The network accessed by the electronic device 100 by using the router 300 may alternatively be a local area network, that is, a group of computer systems connected by using computer networks in a local area. The local area network may implement functions such as resource sharing and information transmission.

In some embodiments, the electronic device 100 may establish a communication connection 2 to the router 300 by using a Wi-Fi module, and access the network based on the communication connection 2 by using the router 300. The communication connection 2 is a Wi-Fi connection. In some other embodiments, the electronic device 100 may also establish a communication connection 1 to the electronic device 200. The communication connection 1 may be a Bluetooth connection, or may be a wireless communication connection such as an infrared connection or a near field communication connection. The electronic device 200 may establish a communication connection 3 to the router 300. In this case, the electronic device 100 may access the network through the electronic device 200 and the router 300. In some other embodiments, the electronic device 200 may alternatively access the network through another network connection device (for example, a base station or another router), and the electronic device 100 may access the network through the electronic device 100 and the base station.

In the network connection system 10, the electronic device 100 may be a watch shown in FIG. 1A, or may be a wearable device of another type such as a band; the electronic device 200 may be a mobile phone shown in FIG. 1A, or may be an electronic device of another type such as a tablet or a notebook computer; and the router 300 may be replaced with a base station, or may be replaced with an electronic device of another type.

It may be understood that the embodiment shown in FIG. 1A is merely an example. In this embodiment of this application, the network connection system 10 may alternatively include more or fewer devices than those shown in FIG. 1A, or devices different from those in the embodiment shown in FIG. 1A. This is not limited in this application.

In this embodiment of this application, the electronic device 100 may also be referred to as a first electronic device, and the electronic device 200 may also be referred to as a second electronic device.

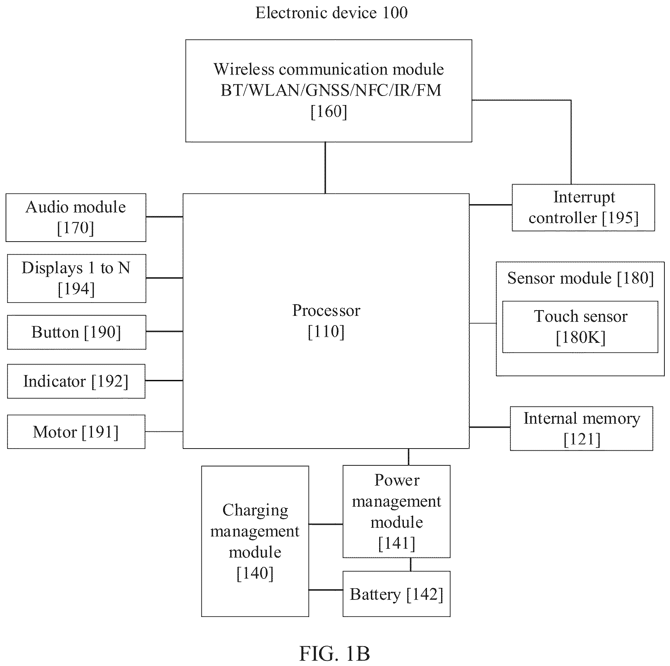

FIG. 1B is a diagram of a structure of the electronic device 100.

The electronic device 100 may be a wearable device such as a watch, a band, or smart glasses. In some embodiments, the electronic device 100 may also be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a vehicle-mounted device, a smart home device, and/or a smart city device. A specific type of the electronic device is not specially limited in this embodiment of this application.

The electronic device 100 may include a processor 110, an internal memory 121, a charging management module 140, a power management module 141, a battery 142, a wireless communication module 160, an audio module 170, a sensor module 180, a button 190, a motor 191, an indicator 192, a display 194, an interrupt controller 195, and the like. The sensor module 180 may include a touch sensor 180K, and optionally, may further include one or more of the following sensors: a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. The processor 110 may include a central processing unit.

The controller may generate an operation control signal based on instruction operation code and a timing signal, to implement control of instruction fetching and instruction execution.

A memory may be further disposed in the processor 110, and is configured to store instructions and data. In some embodiments, the memory in the processor 110 is a cache memory. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency. In some embodiments, the processor 110 may record a wake-up event, count a quantity of occurrences of wake-up events, and further determine whether the electronic device 100 is in a low power consumption scenario (also referred to as a low power mode).

In some embodiments, the processor 110 may include one or more interfaces. The interfaces may include an inter-integrated circuit (inter-integrated circuit, I2C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input from the wired charger through the USB interface. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

The wireless communication module 160 may provide a wireless communication solution that is applied to the electronic device 100, and that includes a wireless local area network

(wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module, for example, a Wi-Fi module and a Bluetooth module. When the electronic device 100 establishes a Wi-Fi connection, the electronic device 100 may receive one or more data packets (for example, a multicast packet, a unicast packet, and a broadcast packet) by using the Wi-Fi module. After receiving the data packet, the Wi-Fi module may send a signal to the interrupt controller 195, where the signal indicates that the Wi-Fi module receives the data packet.

The interrupt controller 195 may receive a signal sent by the Wi-Fi module. If the electronic device 100 is in a sleep state at this time, the interrupt controller 195 may wake up the electronic device 100 from the sleep state to a working state to supply power to the processor 110 again. If the electronic device 100 is in the working state, the interrupt controller 195 may trigger the processor 110 to execute an interrupt service routine for Wi-Fi.

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be manufactured by using a liquid crystal display (liquid crystal display, LCD). The display panel may also be manufactured by using an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The internal memory 121 may include one or more random access memories (random access memory, RAM) and one or more non-volatile memories (non-volatile memory, NVM). The random access memory may be directly read and written by the processor 110, may be configured to store an executable program (for example, machine instructions) of an operating system or another running program, may be further configured to store data of a user and an application, and the like. The non-volatile memory may also store an executable program, data of a user and an application, and the like, which may be pre-loaded to the random access memory for the processor 110 to directly perform a read or write operation.

The audio module 170 may include any one or more of the following: a speaker, a receiver, a microphone, a headset jack, and the like. The electronic device 100 may implement an audio function by using the audio module 170, the application processor, and the like, for example, music playing and sound recording. The audio module 170 is configured to convert digital audio information into an analog audio signal for output, and is also configured to convert an analog audio input into a digital audio signal. The audio module 170 may be configured to encode and decode an audio signal. In some embodiments, the audio module 170 may be disposed in the processor 110, or some functional modules of the audio module 170 are disposed in the processor 110.

The touch sensor 180K is also referred to as a "touch device". The touch sensor 180K may be disposed on the display 194. The touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a position different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. In addition, a touch vibration feedback effect may be user-defined.

The indicator 192 may be an indicator lamp, and may be configured to indicate a charging state and a power change, or and may also be configured to indicate a message, a missed call, a notification, and the like.

It should be noted that, in this embodiment of this application, for a hardware structure of the electronic device 200, refer to the hardware structure of the electronic device 100 shown in FIG. 1B, and the electronic device 200 may include more or fewer hardware components than those in the electronic device 100, or hardware different from that of the electronic device 100. This is not limited in this application.

This application provides a network connection method. A first electronic device (also referred to as an electronic device 100) establishes a Wi-Fi connection to a network connection device by using a wireless fidelity Wi-Fi module. The Wi-Fi module is disabled when it is detected that a quantity of occurrences of wake-up events in a first time period is greater than a first quantity of times, and the first electronic device is in a low power mode. The wake-up event is an event that when the first electronic device receives a data packet through the Wi-Fi connection, an interrupt controller is triggered to wake up the first electronic device from a sleep state to a working state.

According to the network connection method provided in this application, whether to access a network may be determined based on a current scenario and a wake-up frequency. In this way, frequent wake-up of the first electronic device in the low power mode can be avoided, and power consumption of the first electronic device can be reduced.

The following describes a specific procedure of a network connection method according to an embodiment of this application.

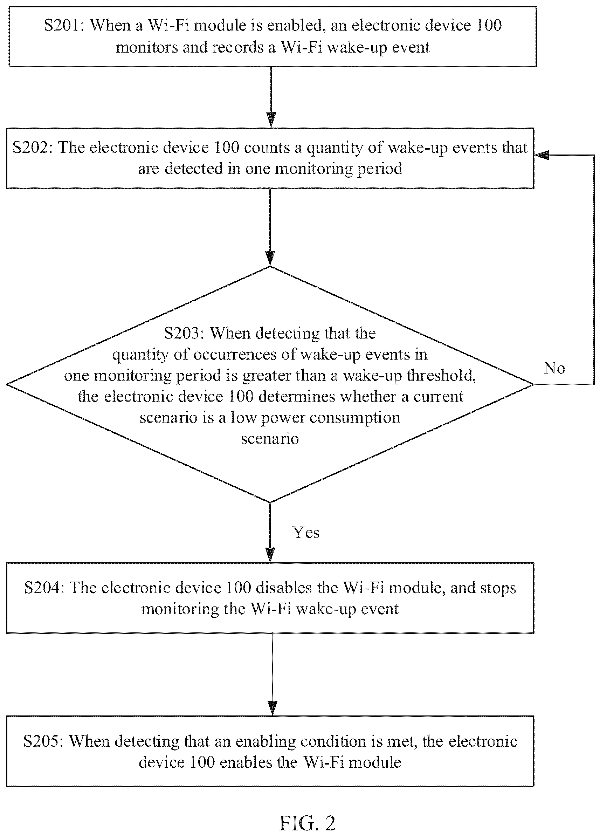

As shown in FIG. 2, a specific procedure of a network connection method may include the following steps:
S201: When a Wi-Fi module is enabled, an electronic device 100 monitors and records a Wi-Fi wake-up event.

Based on whether a power supply module supplies power to the Wi-Fi module, the electronic device 100 may determine whether the Wi-Fi module is enabled. If it is detected that the power supply module supplies power to the Wi-Fi module, the electronic device 100 determines that the Wi-Fi module is enabled; or if it is detected that the power supply module does not supply power to the Wi-Fi module, the electronic device 100 determines that the Wi-Fi module is not enabled.

When the Wi-Fi module is enabled, the electronic device 100 may establish a Wi-Fi connection to a network connection device (for example, the router 300 shown in FIG. 1A). With the Wi-Fi connection established, the electronic device 100 may receive, by using the Wi-Fi module, a data packet sent through the Wi-Fi connection. If the electronic device 100 is in a sleep state when receiving the foregoing data packets, these data packets trigger an interrupt controller to wake up the electronic device 100 from the sleep state to a working state. When the electronic device 100 supplies power to a central processing unit, the electronic device 100 is in the working state; and when the electronic device 100 stops supplying power to the central processing unit, the electronic device 100 is in the sleep state. An event that the interrupt controller wakes up the electronic device 100 from the sleep state to the working state may be referred to as the wake-up event.

After the electronic device 100 is woken up, the electronic device 100 may record the wake-up event by using the CPU.

For example, Table 1 shows a table of wake-up events recorded by the electronic device 100 according to this embodiment of this application.

**Table 1**

| Wake-up time | Wake-up event |
|---|---|
| 10:01:30 | Event A |
| 10:02:15 | Event B |
| 10:02:59 | Event C |
| 10:03:35 | Event D |

As shown in Table 1, the table of wake-up events recorded by the electronic device 100 may include wake-up events and occurrence time (also referred to as wake-up time) of the wake-up events. It can be learned from Table 1 that the electronic device 100 detects the event A at 10:01:30, detects the event B at 10:02:15, detects the event C at 10:02:59, and detects the event D at 10:03:35.

It may be understood that the table of wake-up events shown in Table 1 is merely an example. In this embodiment of this application, the table of wake-up events recorded by the electronic device 100 may include more or less content than that in Table 1, or content different from that in Table 1. This is not limited herein in this application.

In some embodiments, the electronic device 100 may store the recorded table of wake-up events (for example, the foregoing Table 1) in a database or in another file. In some other embodiments, the electronic device 100 may be provided with a variable used to count a quantity of occurrences of wake-up events, and the electronic device 100 may temporarily store the table of wake-up events in the variable.

S202: The electronic device 100 counts a quantity of wake-up events that are detected in one monitoring period.

In some embodiments, the monitoring period may be a preset time period, for example, 30 seconds, 1 minute, or 5 minutes. Using the table of wake-up events shown in Table 1 as an example, if the monitoring period is 2 minutes, a quantity of wake-up times in one monitoring period corresponding to 10:01:30 to 10:03:30 may be 3. In some embodiments, the monitoring period may be set to relatively long time such as 30 minutes or 60 minutes. In this way, a probability of false detection can be reduced.

In some embodiments, the electronic device 100 may use a moment at which wake-up monitoring is started as a start moment, and divide subsequent time into equal time periods, where duration of each time period is one monitoring period. The electronic device 100 may determine, according to the table of wake-up events obtained in step S201, a quantity of occurrences of wake-up events in each monitoring period.

In some other embodiments, there may also be a specific time interval between two adjacent monitoring periods. For example, if the electronic device 100 detects that a quantity of occurrences of wake-up events in a current monitoring period is greater than a wake-up threshold, the electronic device 100 may wait for one time period (for example, 3 minutes or 5 minutes), and then use a current moment as a start moment of a new monitoring period. In this way, meaningless wake-up monitoring can be avoided, and power consumption can be reduced.

S203: When detecting that the quantity of occurrences of wake-up events in one monitoring period is greater than the wake-up threshold, the electronic device 100 determines whether a current scenario is a low power consumption scenario.

The wake-up threshold (also referred to as a first quantity of times) may be a preset quantity of times, for example, 5 times, or 10 times. In some embodiments, a value of the wake-up threshold may also be related to a time length of the monitoring period. A longer time length of the monitoring period indicates a larger wake-up threshold.

The low power consumption scenario (also referred to as a low power mode) may include any one or more of the following: a low power scenario, a screen-off scenario, and a non-perceptible service scenario. The perceptible service may include any one or more of the following: a download service, a music service, a video service, a call service, a network keepalive service applied by a specific application, and the like. The non-perceptible service scenario is a scenario in which a currently executed service does not belong to any one of the foregoing perceptible services.

The following describes several manners of determining whether a current scenario is a low power consumption scenario by using examples.

In some embodiments, based on whether a power level is lower than a preset power level, the electronic device 100 may determine whether a current scenario is the low power scenario. In some other embodiments, based on whether the electronic device 100 is in a charging state and whether the power level of the electronic device 100 is lower than the preset power level, the electronic device 100 may also determine whether the current scenario is the low power level scenario.

In some embodiments, based on whether power is currently supplied to a display (or whether power is supplied to all areas of the display), the electronic device 100 may determine whether the current scenario is the screen-off scenario. It should be noted that, when the electronic device 100 performs step S203, there is a time interval (for example, 2 minutes or 15 minutes) between step S203 and step S201. When the electronic device 100 performs step S203, the electronic device 100 may receive an operation of a user, and end a screen-off state in response to the operation of the user. In this case, the current scenario is neither a screen-off scenario nor a low power consumption scenario. Therefore, even if it has been detected in step S201 that the electronic device 100 is in the sleep state, the electronic device 100 may determine again in step S203 whether the electronic device 100 is in the screen-off scenario.

In some embodiments, based on whether a currently executed service does not belong to the foregoing perceptible services, the electronic device 100 may determine whether the current scenario is the non-perceptible service scenario. In some embodiments, the electronic device 100 may store a list (also referred to as a first list) of application identifiers of specific applications. When detecting that an application applies for a network keepalive service, the electronic device 100 may obtain an application identifier of the application, and compare the application identifier with the list of application identifiers of specific applications stored in the electronic device 100, to determine whether the application belongs to the specific applications. After determining that the application belongs to the specific applications, the electronic device 100 may determine that the current scenario is not the non-perceptible service scenario.

It may be understood that the low power consumption scenario and the determining manners in the foregoing embodiment are merely some examples. In this embodiment of this application, the electronic device 100 may store more or fewer low power consumption scenarios and corresponding determining manners than those in this embodiment, or low power consumption scenarios and corresponding determining manners different from those in this embodiment. This is not limited in this application.

When detecting that a quantity of wake-up times in one monitoring period is greater than the wake-up threshold, the electronic device 100 may determine whether the current scenario is a low power consumption scenario. In this embodiment of this application, the monitoring period may also be referred to as a first time period.

If the current scenario is a low power consumption scenario, the electronic device 100 may determine that there is no service to be executed through Wi-Fi on the electronic device 100 in the current scenario. In this case, the electronic device 100 may perform the following step S204 to disable the Wi-Fi module.

If the current scenario is not a low power consumption scenario, the electronic device 100 may determine that there may be a service that needs to be executed through Wi-Fi in the current scenario. In this case, the electronic device 100 may keep the Wi-Fi module in an enabled state. In some embodiments, when detecting that the quantity of wake-up times in the monitoring period is greater than the wake-up threshold, the electronic device 100 may re-determine whether the current scenario is a low power consumption scenario.

In some embodiments, if the current scenario is not a low power consumption scenario, while keeping the Wi-Fi module in the enabled state, the electronic device 100 may alternatively wait for one fixed time period (for example, 5 minutes) before performing step S202. This can avoid unnecessary power consumption caused by a plurality of times of identifying a current scenario in a process in which the electronic device 100 executes a same service.

S204: The electronic device 100 disables the Wi-Fi module, and stops monitoring the Wi-Fi wake-up event.

In some embodiments, after disabling the Wi-Fi module, the electronic device 100 may establish a communication connection to an electronic device 200, and connect to a network through the electronic device 200. The communication connection between the electronic device 100 and the electronic device 200 may be a Bluetooth connection, or may be another wireless communication connection other than a Wi-Fi connection.

S205: When detecting that the enabling condition is met, the electronic device 100 enables the Wi-Fi module.

The enabling condition may include any one or more of the following: the electronic device is charging and a power level is greater than the preset power level, a specific application applies for network keepalive, an operation performed by a user on a key is received, the electronic device is in a screen-on state and receives a touch operation of a user, an operation of pulling down a shortcut menu by a user is received, and the like.

After the electronic device 100 disables the Wi-Fi module, the electronic device 100 may re-enable the Wi-Fi module when detecting that the enabling condition is met. In this way, the electronic device 100 may re-enable the Wi-Fi module as necessary, to ensure normal use of the user while reducing power consumption.

According to the network connection method provided in this application, when it is detected that the electronic device 100 is frequently woken up, whether a current scenario is a low power consumption scenario can be identified, and the Wi-Fi module can be disabled in the low power consumption scenario. In this way, the Wi-Fi module may be disabled in the low power consumption scenario, to avoid power consumption caused by frequent wake-up. In addition, the Wi-Fi module is not disabled in a non-low power consumption scenario, to avoid missing important service data.

In some embodiments, the electronic device 100 may also disable the Wi-Fi module when detecting that the device is not worn by the user and is screen-off for preset duration (also referred to as first duration) in a low power consumption scenario, to reduce power consumption.

The following describes a specific procedure of another network connection method according to an embodiment of this application.

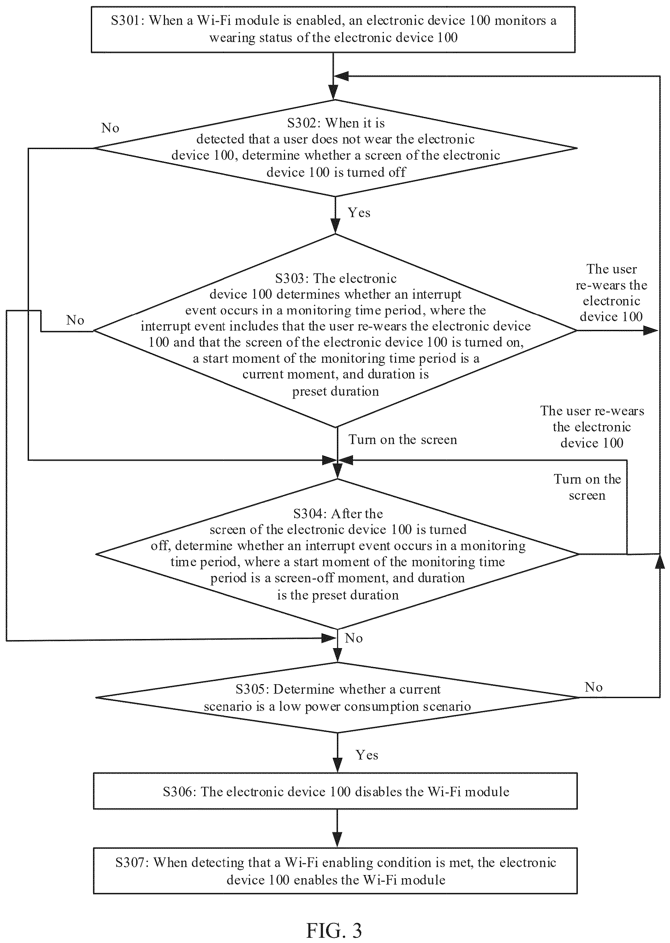

As shown in FIG. 3, a specific procedure of a network connection method may include the following steps:

S301: When a Wi-Fi module is enabled, an electronic device 100 monitors a wearing status of the electronic device 100.

In some embodiments, after being powered on, the electronic device 100 may monitor in real time whether a user wears the electronic device 100.

In some other embodiments, the electronic device 100 may also monitor in real time whether the user wears the electronic device 100 when the Wi-Fi module is enabled.

The following describes two manners of detecting wearing of the electronic device 100 according to this embodiment of this application.

In some embodiments, a photoplethysmography (photoplethysmography, PPG) component may be disposed in the electronic device 100. Based on whether the PPG component can detect a regular pulse wave signal, the electronic device 100 may determine whether the user wears the electronic device 100.

In some other embodiments, a capacitive sensor may also be disposed on an inner side of the electronic device 100. When the user wears the electronic device 100, the capacitive sensor is in contact with the skin of the user, which causes a capacitance change. The electronic device 100 may alternatively determine, by detecting a capacitance change by using the capacitive sensor, whether the user wears the electronic device 100.

It may be understood that the foregoing two manners of determining whether the electronic device 100 is worn are merely examples. In this embodiment of this application, the electronic device 100 may alternatively determine, in another manner, whether the electronic device 100 is worn by the user. This is not limited in this application.

S302: When it is detected that the user does not wear the electronic device 100, determine whether a display of the electronic device 100 is turned off.

In some embodiments, the electronic device 100 may determine whether the electronic device 100 is in a screen-off state or a screen-on state by determining whether a power supply module supplies power to the display (or an entire area of the display). If the electronic device 100 supplies power to the display through the power supply module, the electronic device 100 is in the screen-on state; or if the electronic device 100 does not supply power to the display through the power supply module, the electronic device 100 is in the screen-off state.

In some other embodiments, when the screen of the electronic device 100 is turned off/on, a display manager (for example, a DisplayManager module in an Android system) in the electronic device 100 may broadcast a screen-off notification/screen-on notification, and the electronic device 100 may determine, based on the screen-off notification/screen-on notification, whether the screen is turned off/on.

If the electronic device 100 is currently in the screen-off state, the electronic device 100 may perform the following step S303.

If the electronic device 100 is currently in the screen-on state, the electronic device 100 may perform the following step S304.

S303: The electronic device 100 determines whether an interrupt event occurs in a monitoring time period, where the interrupt event includes that the user re-wears the electronic device 100 and that the screen of the electronic device 100 is turned on, a start moment of the monitoring time period is a current moment, and duration is preset duration.

For a manner of determining the screen-off state and the screen-on state by the electronic device 100, refer to related content in step S302.

The electronic device 100 may determine, based on a real-time wearing monitoring result, whether the user re-wears the electronic device 100.

The following describes two timing manners of the monitoring time period.

In some embodiments, the electronic device 100 may set a timer for a wearing monitoring service. The timer may correspond to the monitoring time period. A setting moment of the timer is a start moment of the monitoring time period, and a countdown end moment of the timer is an end moment of the monitoring time period. In this way, the electronic device 100 may be triggered in time to perform a subsequent step.

In some other embodiments, the electronic device 100 may reuse a timer for another service in a system. In this case, the electronic device 100 may record a current moment as the start moment of the monitoring time period, and when detecting that the timer for another service ends, determine whether duration between a current moment and the start moment of the monitoring time period reaches the preset duration. If the duration between the current moment and the start moment of the monitoring time period is less than the preset duration, the electronic device 100 may wait for a next timer of a service to end and then re-determine a relationship between the preset duration and duration between a current moment and the start moment of the monitoring time period. If the duration between the current moment and the start moment of the monitoring time period is greater than or equal to the preset duration, the electronic device 100 may determine that the monitoring time period ends. This can eliminate power consumption overheads of an extra timer.

If the screen of the electronic device 100 is turned on in the monitoring time period, the electronic device 100 may perform the following step S304.

In the monitoring time period, if it is detected that the user re-wears the electronic device 100, the electronic device 100 may perform the foregoing step S302.

If it is detected that no interrupt event occurs in the monitoring time period, the electronic device 100 may perform the following step S305.

It should be noted that, if the electronic device 100 detects that an interrupt event occurs, the electronic device 100 may immediately perform the foregoing steps corresponding to different cases without waiting for an end of the monitoring time period. In this case, the electronic device 100 may delete the timer corresponding to the wearing monitoring service, or stop reusing the timer for another service.

S304: After the screen of the electronic device 100 is turned off, determine whether an interrupt event occurs in a monitoring time period, where a start moment of the monitoring time period is a screen-off moment, and duration is the preset duration.

For both a timing manner of the monitoring time period and specific content of the interrupt event, refer to the related content in the foregoing step S303.

If the screen of the electronic device 100 is turned on in the monitoring time period, the electronic device 100 may re-perform step S304.

In the monitoring time period, if it is detected that the user re-wears the electronic device 100, the electronic device 100 may perform the foregoing step S302.

If it is detected that no interrupt event occurs in the monitoring time period, the electronic device 100 may perform the following step S305.

S305: Determine whether a current scenario is a low power consumption scenario.

For specific content and a determining manner of the low power consumption scenario, refer to the related descriptions in step S202 shown in FIG. 2. Details are not described herein again.

If the current scenario is a low power consumption scenario, the electronic device 100 may perform the following step S306 to disable the Wi-Fi module.

If the current scenario is not a low power consumption scenario, the electronic device 100 may keep the Wi-Fi module in an enabled state. Optionally, the electronic device 100 may re-perform step S302, or re-perform step S302 after waiting for a period of time, which may be the preset duration.

In some embodiments, if the electronic device 100 detects that a specific application applies for network keepalive, the electronic device 100 re-performs the foregoing step S302 after detecting that the application releases network keepalive.

S306: The electronic device 100 disables the Wi-Fi module.

S307: When detecting that a Wi-Fi enabling condition is met, the electronic device 100 enables the Wi-Fi module.

For specific content of step S306 and step S307, refer to the related descriptions of step S204 and step S205 shown in FIG. 2.

According to the network connection method provided in this application, when the user does not wear the electronic device 100 and the electronic device 100 is in a low power consumption scenario, the Wi-Fi module may be disabled, to reduce power consumption of the electronic device 100.

In some embodiments, the electronic device 100 may also disable the Wi-Fi module when detecting a Wi-Fi long wake lock event in a low power consumption scenario, to reduce power consumption.

The following describes a specific procedure of another network connection method according to an embodiment of this application.

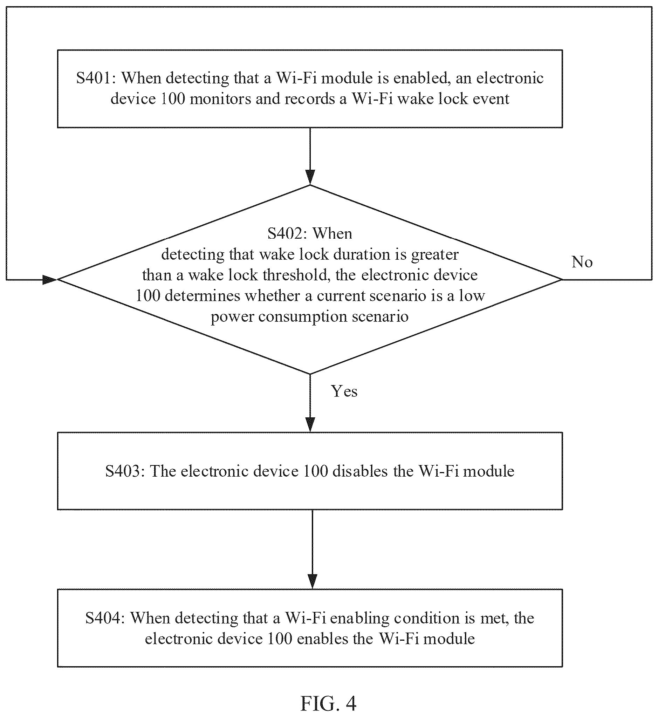

As shown in FIG. 4, a specific procedure of a network connection method may include the following steps:

S401: When detecting that a Wi-Fi module is enabled, an electronic device 100 monitors and records a Wi-Fi wake lock event.

For example, Table 2 shows a table of wake lock events recorded by the electronic device 100 according to this embodiment of this application.

**Table 2**

| Wake lock event | Wake lock moment | Release moment |
|---|---|---|
| Event A1 | 10:01:30 | 10:03:50 |
| Event B1 | 10:04:01 | 10:05:20 |
| Event C1 | 10:15:30 | 10:20:43 |
| Event D1 | 11:01:30 | 11:05:30 |

As shown in Table 2, the table of wake lock events recorded by the electronic device 100 may include wake lock events and wake lock time (including a wake lock moment and a release moment). It can be learned from Table 2 that, a wake lock moment of the event A1 is 10:01:30 and a release moment is 10:03:50; a wake lock moment of the event B1 is 10:04:01 and a release moment is 10:05:20; a wake lock moment of the event C1 is 10:15:30 and a release moment is 10:20:43; and a wake lock moment of the event D1 is 11:01:30 and a release moment is 11:05:30.

It may be understood that the table of wake lock events shown in Table 2 is merely an example. In this embodiment of this application, the table of wake lock events recorded by the electronic device 100 may include more or less content than that in Table 2, or content different from that in Table 2. This is not limited herein in this application.

In some embodiments, in a standby operating system based on a lock mechanism, the electronic device 100 may obtain wake lock duration of each service based on a record of the operating system. Using an Android system as an example, the electronic device 100 may obtain wake lock duration of each service from /proc/wakeup_sources of the Android system. In some other embodiments, the electronic device 100 may alternatively periodically record wake lock duration of each service. Using the Android system as an example, the electronic device 100 may store a table of wake lock events in /proc/wakeup_sources of the Android system.

S402: When detecting that wake lock duration is greater than a wake lock threshold, the electronic device 100 determines whether a current scenario is a low power consumption scenario.

In some embodiments, the wake lock duration may be wake lock duration of a single wake lock event. The electronic device 100 may determine wake lock duration of each wake lock event based on a recorded wake lock moment and a recorded release moment of the wake lock event. In some other embodiments, when detecting that a wake lock event occurs and the wake lock event is not released, the electronic device 100 may determine, based on a wake lock moment of the wake lock event and a current moment, wake lock duration of the wake lock event; and when detecting that the wake lock duration is greater than the wake lock threshold, determine whether a current scenario is a low power consumption scenario.

The wake lock threshold may be preset duration, for example, 3 minutes or 10 minutes. In this embodiment of this application, the wake lock duration may also be referred to as second duration.

If the current scenario is a low power consumption scenario, the electronic device 100 may perform the following step S403 to disable the Wi-Fi module.

If the current scenario is not a low power consumption scenario, the electronic device 100 may keep the Wi-Fi module in an enabled state, and perform step S402 when detecting another wake lock event whose wake lock duration is greater than the wake lock threshold.

In some other embodiments, the wake lock duration may also be a sum of wake lock duration of all wake lock events in one wake lock period. The wake lock period may be a preset time period. The electronic device 100 may also collect statistics on total duration of wake lock events in one wake lock period, and determine whether the wake lock duration is greater than the wake lock threshold.

If the current scenario is a low power consumption scenario, the electronic device 100 may perform the following step S403 to disable the Wi-Fi module.

If the current scenario is not a low power consumption scenario, the electronic device 100 may keep the Wi-Fi module in the enabled state, and perform step S402 when detecting a wake lock event, in the next wake lock period, whose wake lock duration is greater than the wake lock threshold.

S403: The electronic device 100 disables the Wi-Fi module.

In some embodiments, after disabling the Wi-Fi module, the electronic device 100 may establish a communication connection to an electronic device 200, and connect to a network through the electronic device 200. The communication connection between the electronic device 100 and the electronic device 200 may be a Bluetooth connection, or may be another wireless communication connection other than a Wi-Fi connection.

S404: When detecting that a Wi-Fi enabling condition is met, the electronic device 100 enables the Wi-Fi module.

For specific content of step S403 and step S404, refer to the related descriptions of step S203 and step S204 shown in FIG. 2. Details are not described herein again.

According to the network connection method provided in this application, when a long wake lock event is detected and the electronic device 100 is in a low power consumption scenario, the Wi-Fi module may be disabled, to avoid power consumption caused by a long wake lock of an unnecessary service.

In some embodiments, when the electronic device 100 enables the Wi-Fi module, the electronic device 100 may also determine, when detecting that any one of scenario identification conditions is met, whether a current scenario is a low power consumption scenario, and disable the Wi-Fi module when identifying that the current scenario is a low power consumption scenario. The scenario identification condition may include the following: it is detected that a quantity of occurrences of wake-up events in a first time period (a monitoring period) is greater than a wake-up threshold, duration of a not-wearing and screen-off event reaches first duration, Wi-Fi wake lock duration reaches second duration, and the like. For specific content such as a specific determining manner of the scenario identification condition, a determining manner of the low power consumption scenario, and whether to enable the Wi-Fi module subsequently, refer to the related descriptions in embodiments shown in FIG. 2 to FIG. 5. Details are not described herein again.

It may be understood that, after disabling the Wi-Fi module, the electronic device 100 may also re-establish a communication connection to the electronic device 200 in a wireless communication manner such as Bluetooth, connect to a network through the electronic device 200, and communicate with another electronic device in the network.

In some embodiments, when the electronic device 100 enables the Wi-Fi module, after detecting that a communication connection is established to the electronic device 200, the electronic device 100 may disable the Wi-Fi module and access the network through the electronic device 200. In this way, power consumption of maintaining the Wi-Fi module can be eliminated.

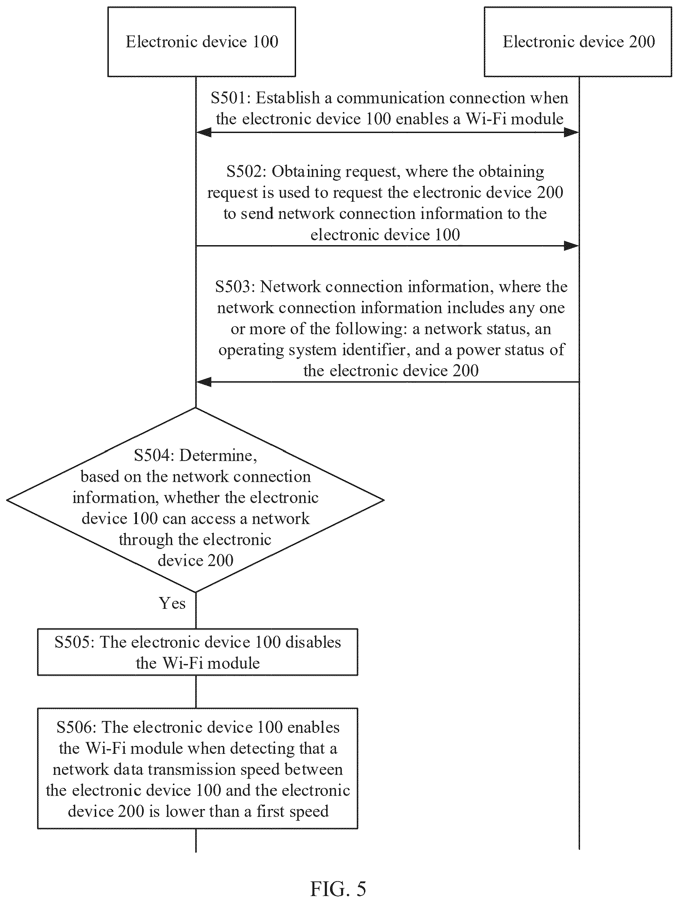

In some other embodiments, after the electronic device 100 establishes the communication connection to the electronic device 200, the electronic device 100 may further determine whether the electronic device 100 can access the network through the electronic device 200. For a specific procedure, refer to the following embodiment shown in FIG. 5.

As shown in FIG. 5, a specific procedure of a network connection method may include the following steps:

S501: When an electronic device 100 enables a Wi-Fi module, the electronic device 100 establishes a communication connection to an electronic device 200.

The communication connection established between the electronic device 100 and the electronic device 200 may be a Bluetooth connection, or may be another wireless communication connection other than a Wi-Fi connection.

S502: The electronic device 100 sends an obtaining request to the electronic device 200, where the obtaining request is used to request the electronic device 200 to send network connection information to the electronic device 100.

S503: The electronic device 200 sends the network connection information to the electronic device 100, where the network connection information includes any one or more of the following: a network status, an operating system identifier, and a power status of the electronic device 200.

In some embodiments, the network status may include an available state and an unavailable state. When the network status of the electronic device 200 is the available state, the electronic device 200 is connected to a network. When the network status of the electronic device 200 is the unavailable state, the electronic device 200 is disconnected from the network. In some other embodiments, the network status may further include one or more network states such as excellent network quality, good network quality, and poor network quality, where these network states indicate network quality of the electronic device 200.

The operating system identifier indicates an operating system (or an operation platform) used by the electronic device 200. In some embodiments, when the electronic device 200 is loaded with a specific operating system, the electronic device 200 does not support another electronic device in using the network of the electronic device 200.

The power status may indicate a remaining power level of the electronic device 200.

It may be understood that this embodiment herein is merely some examples. In this embodiment of this application, the network connection information may include more or less content than that in this embodiment, or content different from that in this embodiment. This is not limited in this application.

S504: The electronic device 100 determines, based on the network connection information, whether the electronic device 100 can access the network through the electronic device 200.

That the electronic device 100 can access the network through the electronic device 200 means that the electronic device 100 may communicate with a peer device through the electronic device 200. The peer device may be a network connection device, or may be another electronic device in the network connected through the network connection device. In this embodiment of this application, the peer device may also be referred to as a third electronic device.

In some embodiments, the electronic device 100 may determine, based on the network status of the electronic device 200 in the network connection information, whether the electronic device 100 can access the network through the electronic device 200. If the network status of the electronic device 200 is the available state, the electronic device 100 may determine that the network can be accessed through the electronic device 200. If the network status of the electronic device 200 is the unavailable state, the electronic device 100 may determine that the network cannot be accessed through the electronic device 200. In some other embodiments, the electronic device 100 may alternatively determine, based on the network quality in the network status, whether the electronic device 100 can access the network through the electronic device 200. This is not limited in this application.

In some embodiments, the electronic device 100 may determine, based on the operating system identifier of the electronic device 200 in the network connection information, whether the electronic device 100 can access the network through the electronic device 200. The electronic device 100 may store one or more operating system identifiers, and determine whether the operating system identifier of the electronic device 200 belongs to the one or more operating system identifiers. If the operating system identifier stored in the electronic device 100 includes the operating system identifier of the electronic device 200, the electronic device 100 may determine that the network can be accessed through the electronic device 200. If the operating system identifier stored in the electronic device 100 does not include the operating system identifier of the electronic device 200, the electronic device 100 may determine that the network cannot be accessed through the electronic device 200.

In some other embodiments, the electronic device 100 may determine, based on the power status of the electronic device 200 in the network connection information, whether the electronic device 100 can access the network through the electronic device 200. The electronic device 100 may store a power level threshold. If a power level of the electronic device 200 is greater than the power level threshold, the electronic device 100 may determine that the network can be accessed through the electronic device 200. If the power level of the electronic device 200 is less than or equal to the power level threshold, the electronic device 100 may determine that the network cannot be accessed through the electronic device 200.

In some embodiments, the electronic device 100 may also determine, based on a plurality of pieces of information in the network connection information, whether the electronic device 100 can access the network through the electronic device 200. For example, if the power level of the electronic device 200 is greater than the power level threshold, the network status is the available state, and the operating system of the electronic device 200 supports another electronic device in using the network of the electronic device 200, the electronic device 100 may determine that the network can be accessed through the electronic device 200; or if the power level of the electronic device 200 is less than the power level threshold, the network status is the unavailable state, or the operating system of the electronic device 200 does not support another electronic device in using the network of the electronic device 200, the electronic device 100 may determine that the network cannot be accessed through the electronic device 200.

It may be understood that the foregoing embodiments are merely examples. In this embodiment of this application, a specific manner of determining, based on the network connection information, whether the electronic device 100 can access the network through the electronic device 200 may further include more or fewer manners than those described above, or manners different from those described above. This is not limited in this application.

If the electronic device 100 can access the network through the electronic device 200, the electronic device 100 may perform the following step S505.

If the electronic device 100 cannot access the network through the electronic device 200, the electronic device 100 may keep the Wi-Fi module in an enabled state.

S505: The electronic device 100 disables the Wi-Fi module.

S506: The electronic device 100 enables the Wi-Fi module when detecting that a network data transmission speed between the electronic device 100 and the electronic device 200 is lower than a first speed.

After disabling the Wi-Fi module, the electronic device 100 may monitor a current network data transmission speed between the electronic device 100 and the electronic device 200 in real time. When detecting that the network data transmission speed is lower than the first speed, the electronic device 100 may re-enable the Wi-Fi module.

In some other embodiments, the network data transmission speed may be replaced with a network signal strength (for example, a Wi-Fi signal strength or a mobile data signal strength) of the electronic device 200. The electronic device 100 may obtain the network signal strength of the electronic device 200 in real time, and determine whether the network signal strength is less than a first signal strength. When detecting that the network signal strength of the electronic device 200 is less than the first signal strength, the electronic device 100 may re-enable the Wi-Fi module.

In some other embodiments, the electronic device 100 may obtain the power level and the network status of the electronic device 200 in real time, and determine, based on the power level and the network status of the electronic device 200, whether the electronic device 100 can access the network through the electronic device 200. When determining that the electronic device 100 cannot access the network through the electronic device 200, the electronic device 100 may re-enable the Wi-Fi module.

According to the network connection method provided in this application, the electronic device 100 may access the network through the electronic device 200, and may further re-enable the Wi-Fi module when network quality of the electronic device 200 is poor. This not only reduces power consumption of the Wi-Fi module in the electronic device 100, but also provides good network use experience for a user.

In some embodiments, when the electronic device 100 does not enable the Wi-Fi module, the electronic device 100 establishes a communication connection to the electronic device 200. In this case, the electronic device 100 may obtain the network connection information sent by the electronic device 200, and determine whether the electronic device 100 can access the network through the electronic device 200. If the electronic device 100 can access the network through the electronic device 200, the electronic device 100 may directly access the network through the electronic device 200, and enable the Wi-Fi module of the electronic device 100 when detecting that the network transmission speed between the electronic device 100 and the electronic device 200 is lower than the first speed. If the electronic device 100 cannot access the network through the electronic device 200, the electronic device 100 may enable the Wi-Fi module.

In this way, when the network of the electronic device 200 can be used, the Wi-Fi module does not need to be enabled, eliminating power consumption caused by enabling and disabling the Wi-Fi module.

In some embodiments, after the electronic device 100 establishes the communication connection to the electronic device 200, the electronic device 100 may send a network use request to the electronic device 200, where the network use request is used to request to access the network through the electronic device 200. The electronic device 200 may receive the network use request; and in response to the network use request, determine, based on the network connection information, whether the electronic device 100 can access the network through the electronic device 200, and send a determining result to the electronic device 100. The determining result may be used to notify the electronic device 100 whether the electronic device 100 can access the network through the electronic device 200. When the electronic device 100 can access the network through the electronic device 200, the electronic device 100 may perform step S505 and step S506 shown in FIG. 5. In this case, the determining result sent by the electronic device 200 to the electronic device 100 may be a first notification. When the electronic device 100 cannot access the network through the electronic device 200, the electronic device 100 may keep the Wi-Fi module in the enabled state. For a manner in which the electronic device 200 determines, based on the network connection information, whether the electronic device 100 can access the network through the electronic device 200, refer to the related descriptions in the embodiment shown in FIG. 5.

In this way, the electronic device 200 may directly send the determining result to the electronic device 100 without sending the network connection information, thereby reducing transmission power consumption.

In some other embodiments, when the electronic device 100 accesses the network through the electronic device 200, the electronic device 200 may determine, in real time based on the network connection information, whether the electronic device 100 is supported in accessing the network. If it is determined that the electronic device 200 does not support the electronic device 100 in accessing the network, the electronic device 200 may send a second notification to the electronic device 100. The second notification indicates that the electronic device 200 does not support the electronic device 100 in accessing the network through the electronic device 200. After receiving the second notification, the electronic device 100 enables the Wi-Fi module.

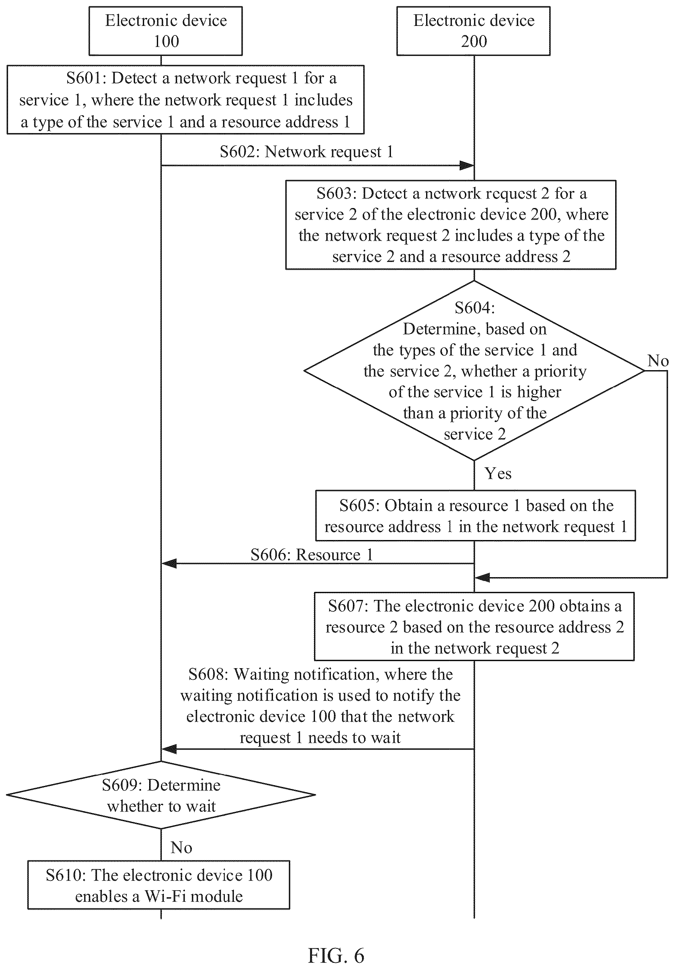

In some embodiments, in a process in which the electronic device 100 accesses the network through the electronic device 200 and uses a network service, the electronic device 200 may coordinate use (for example, use time and/or bandwidth) of the network service between the electronic device 100 and the electronic device 200. The electronic device 100 may dynamically enable or disable the Wi-Fi module of the electronic device 100 based on a notification sent by the electronic device 200. For a specific procedure, refer to the following embodiment shown in FIG. 6.

As shown in FIG. 6, a specific procedure of a network connection method may include the following steps:

S601: When an electronic device 100 accesses a network through an electronic device 200, the electronic device 100 detects a network request 1 for a service 1, where the network request 1 includes a type of the service 1 and a resource address 1.

The network request 1 may include the type of the service 1 and the resource address 1. The network request 1 is used to request to obtain a resource 1 corresponding to the service 1, and an obtaining address of the resource 1 is the resource address 1. In this embodiment of this application, the service 1 may also be referred to as a first service, the network request 1 may also be referred to as a first request, the resource 1 may also be referred to as first data, and the resource address 1 may also be referred to as a first address.

The service type may include but is not limited to the following: a take-out service, a ride-hailing service, a web page browsing service, a chat service, a video call service, a video service, an audio service, a navigation service, a ticket booking service, an application upgrade service, or the like.

In some embodiments, the electronic device 100 may receive an operation of a user, and generate a network request in response to the operation. For example, the electronic device 100 may receive an operation of opening a map application by the user, and generate a network request in response to the operation, where the network request is used to request to obtain a map near a current location of the electronic device 100.

In some other embodiments, the electronic device 100 may also receive a request of an application, and generate a network request. For example, the electronic device 100 may receive an upgrade request of an application, and generate a network request, where the network request is used to obtain an upgraded installation package of the application.

S602: The electronic device 100 sends the network request 1 to the electronic device 200.

S603: The electronic device 200 detects a network request 2 for a service 2 of the electronic device 200, where the network request 2 includes a type of the service 2 and a resource address 2.

For a manner of generating the network request 2 by the electronic device 200 and specific content descriptions of the network request 2, refer to the related descriptions of the network request 1 in step S601. Details are not described herein again.

It should be noted that the electronic device 200 may detect the network request 2 before receiving the network request 1 or when receiving the network request 1.

S604: The electronic device 200 determines, based on the types of the service 1 and the service 2, whether a priority of the service 1 is higher than a priority of the service 2.

The electronic device 200 may store a correspondence between a service type and a service priority.

For example, Table 3 shows the correspondence between a service type and a priority stored in the electronic device 200 according to this embodiment of this application.

**Table 3**

| Service type | Priority |
|---|---|
| Navigation service | High |
| Take-out service | High |
| Video service | Medium |
| Web page browsing service | Medium |
| Application upgrade service | Low |

As shown in Table 3, the electronic device 200 may determine a priority of a service based on a service type. For example, when the service type is a navigation service, a priority of the service is high; when the service type is a take-out service, a priority of the service is high; when the service type is a video service, a priority of the service is medium; when the service type is a network browsing service, a priority of the service is medium; and when the service type is an application upgrade service, a priority of the service is low.

It may be understood that the embodiment shown in Table 3 is merely an example. In this embodiment of this application, the electronic device 200 may store more or fewer correspondences between service types and priorities than those in the embodiment shown in Table 3, or correspondences between service types and priorities different from those in the embodiment shown in Table 3. This is not limited in this application.

The electronic device 200 may determine, based on the type of the service 1 in the network request 1, the type of the service 2 in the network request 2, and the correspondence between the service type and the service priority, whether the priority of the service 2 is higher than the priority of the service 1.

If the priority of the service 1 is higher than the priority of the service 2, the electronic device 200 may perform the following step S605 and step S606.

If the priority of the service 2 is higher than the priority of the service 1, the electronic device 200 may perform the following step S607 and subsequent steps.

It should be noted that, if priorities of the service 1 and the service 2 are the same, the electronic device 200 may preferentially execute a service of the electronic device 200, that is, preferentially execute the service 2.

S605: The electronic device 200 obtains the resource 1 based on the resource address 1 in the network request 1.

S606: The electronic device 200 sends the resource 1 to the electronic device 100.

After obtaining the resource 1, the electronic device 200 may perform step S607, and does not need to perform step S608.

S607: The electronic device 200 obtains the resource 2 based on the resource address 2 in the network request 2.

S608: The electronic device 200 sends a waiting notification to the electronic device 100, where the waiting notification is used to notify the electronic device 100 that the network request 1 needs to wait.

In some embodiments, the waiting notification may further include waiting time, and the waiting time may be time estimated by the electronic device 200 based on a size of the resource 2 and a current transmission rate of a network. In some embodiments, the waiting notification may also be referred to as a third notification, and the third notification indicates that the electronic device 200 is unable (including temporarily unable) to obtain the resource 1.

S609: The electronic device 100 determines whether to wait.

In some embodiments, after receiving the waiting notification, the electronic device 100 may display a prompt window. The prompt window may be used to query the user whether to wait. The prompt window may further include a waiting control and a waiting reject control. In this case, the electronic device 100 may determine, based on an operation performed by the user on the prompt window, whether to wait for the electronic device 200 to obtain and send the resource 1.

In some other embodiments, the electronic device 100 may also store the correspondence between the service type and the service priority. For a specific correspondence, refer to the related descriptions in the embodiment shown in Table 3. A priority threshold, for example, high (or medium), may be set for the electronic device 100. If the electronic device 100 detects that the priority of the service 1 reaches the priority threshold, the electronic device 100 may determine not to wait.

It may be understood that the embodiment herein is merely an example. In this embodiment of this application, the electronic device 100 may alternatively determine, in another manner, whether to wait. This is not limited herein in this application.

If the electronic device 100 determines to wait, the electronic device 100 may wait for the electronic device 200 to obtain the resource 1 and send the resource 1 to the electronic device 100.

If the electronic device 100 determines not to wait, the electronic device 100 may perform the following step S610.

S610: The electronic device 100 enables the Wi-Fi module.

According to the network connection method provided in this embodiment of this application, power consumption caused by keeping the Wi-Fi module active for extended time can be reduced, and network use experience of the user of the electronic device 100 can be ensured through coordination.

In some other embodiments, the network request (for example, the network request 1 or the network request 2) in the embodiment shown in FIG. 6 may also include a service type, an identifier of a receiving device (for example, an identifier of a third electronic device), and to-be-sent service data. In this case, the network request may be used to request the electronic device 200 to send the service data to the receiving device. Alternatively, the electronic device 200 may determine priorities of services based on service types in a plurality of received network requests, and sequentially send service data in the network requests (or obtain data requested by the network requests) based on the priorities. A specific service requested by the network request is not limited in this application.

In some embodiments, when the electronic device 200 receives the network request 1 sent by the electronic device 100, if the electronic device 200 is obtaining the resource 2 requested by the network request 2, the electronic device 200 may obtain the resource 1 based on the network request 1 after the electronic device 200 obtains the resource 2.

In this case, the electronic device 200 determines, based on a sequence of receiving the network requests, a sequence of obtaining resources.

In some other embodiments, the electronic device 200 may allocate different bandwidths to different services based on priorities of a plurality of services, for example, allocate a wider bandwidth to a service with a higher priority, and allocate a narrower bandwidth to a service with a lower priority. The electronic device 100 may enable the Wi-Fi module when detecting that a currently allocated bandwidth is less than a bandwidth threshold. For a specific procedure, refer to the embodiment shown in FIG. 6 by analogy. This is not limited in this application.

In this case, the electronic device 200 allocates different bandwidths to different services based on service priorities, to ensure better network experience for a service with a higher priority.

The following describes functional modules of an electronic device 100 provided in an embodiment of this application.

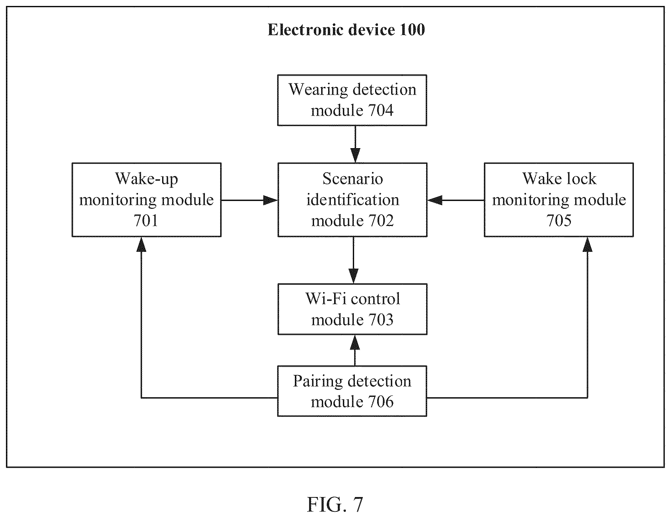

As shown in FIG. 7, the electronic device 100 may include a wake-up monitoring module 701, a scenario identification module 702, a Wi-Fi control module 703, a wearing detection module 704, a wake lock monitoring module 705, a pairing detection module 706, and the like.

The wake-up monitoring module 701 may monitor and record a Wi-Fi wake-up event and wake-up time, and determine a quantity of Wi-Fi wake-up times of the electronic device 100 in a monitoring period. The wake-up monitoring module 701 may further store a preset wake-up threshold, and determine whether the quantity of Wi-Fi wake-up times in the monitoring period is greater than the wake-up threshold. When the quantity of Wi-Fi wake-up times in the monitoring period is greater than the wake-up threshold, the wake-up monitoring module 701 may send a scenario identification instruction to the scenario identification module 702. The scenario identification instruction is used to instruct the scenario identification module 702 to determine whether a current scenario is a low power consumption scenario.

The scenario identification module 702 may receive the scenario identification instruction sent by the wake-up monitoring module 701 (or the wearing detection module 704, the wake lock monitoring module 705, or the like); and in response to the scenario identification instruction, identify a current scenario, and determine whether the current scenario is a low power consumption scenario. When the current scenario is a low power consumption scenario, the scenario identification module 702 may send a disable instruction to the Wi-Fi control module 703. The disable instruction is used to instruct the Wi-Fi control module 703 to disable a Wi-Fi module (for example, a Wi-Fi chip). In some embodiments, the scenario identification module 702 may also store one or more enabling conditions. After the Wi-Fi module is disabled, the scenario identification module 702 may detect whether the electronic device 100 meets the enabling condition. When it is detected that any enabling condition is met, the scenario identification module 702 may send an enable instruction to the Wi-Fi control module 703. The enable instruction is used to instruct the Wi-Fi control module 703 to enable the Wi-Fi module.

The Wi-Fi control module 703 may receive the disable instruction sent by the scenario identification module 702 or the pairing detection module 706, and in response to the disable instruction, disable the Wi-Fi module. In some embodiments, the Wi-Fi control module 703 may also receive the enable instruction sent by the scenario identification module 702 or the pairing detection module 706, and in response to the enable instruction, enable the Wi-Fi device.

The wearing detection module 704 may detect whether the electronic device 100 is worn by a user. When it is detected that the user does not wear the electronic device 100, the wearing detection module 704 may further record duration in which the user does not wear the electronic device 100. When it is detected that a screen-off state and a non-wearing state last greater than a preset time threshold, the wearing detection module 704 may send a scenario identification instruction to the scenario identification module 702. The scenario identification instruction is used to instruct the scenario identification module 702 to determine whether the current scenario is a low power consumption scenario.

The wake lock monitoring module 705 may monitor and record a Wi-Fi wake lock event and wake lock time (including a wake lock moment and a release moment), and determine wake lock duration of each wake lock time. The wake lock monitoring module 705 may further store a preset wake lock threshold, and determine whether wake lock duration of each wake lock event is greater than the wake lock threshold. When it is detected that the wake lock duration of the wake lock event is greater than the wake lock threshold, the wake lock monitoring module 705 may send a scenario identification instruction to the scenario identification module 702. The scenario identification instruction is used to instruct the scenario identification module 702 to determine whether the current scenario is a low power consumption scenario.

The pairing detection module 706 may detect whether the electronic device 100 establishes a communication connection to another electronic device (for example, an electronic device 200). In some embodiments, the pairing detection module 706 may further receive network connection information of the electronic device 200 that is sent by the electronic device 200, and determine, based on the network connection information of the electronic device 200, whether the electronic device 100 can access a network through the electronic device 200. In some other embodiments, the pairing detection module 706 may also receive a determining result sent by the electronic device 200, where the determining result is used to indicate whether the electronic device 100 can access the network through the electronic device 200. In this case, the pairing detection module 706 may also determine, based on the determining result, whether the electronic device 100 can access the network through the electronic device 200.

When determining that the electronic device 100 can access the network through the electronic device 200, the pairing detection module 706 may send a disable instruction to the Wi-Fi control module 703, where the disabling instruction is used to instruct the Wi-Fi control module 703 to disable the Wi-Fi module. In some embodiments, after the Wi-Fi module is disabled, the pairing detection module 706 may further obtain a network status and/or a power status of the electronic device 200 in real time, and determine, based on the network status and/or the power status of the electronic device 200, whether the electronic device 200 can further support the electronic device 100 in using a network of the electronic device 200. In some embodiments, the electronic device 100 may alternatively obtain a network data transmission speed between the electronic device 100 and the electronic device 200 in real time. When detecting that the network data transmission speed is lower than a first speed, the electronic device 100 may also determine that the electronic device 100 cannot access the network through the electronic device 200. When determining that the electronic device 100 cannot access the network through the electronic device 200, the pairing detection module 706 may send an enable instruction to the Wi-Fi control module 703, where the enable instruction is used to instruct the Wi-Fi control module 703 to enable the Wi-Fi module. In some other embodiments, when determining that the electronic device 200 cannot support the electronic device 100 in using the network of the electronic device 200, the pairing detection module 706 may further send a start instruction to the wake-up monitoring module 701 and/or the wake lock monitoring module 705. The start instruction is used to instruct the wake-up monitoring module 701 or the wake lock monitoring module 705 to enable wake-up monitoring or wake lock monitoring.

It may be understood that the embodiment shown in FIG. 7 is merely an example. In this embodiment of this application, the electronic device 100 may further include more or fewer functional modules than those in the embodiment shown in FIG. 7, or functional modules different from those in the embodiment shown in FIG. 7, or combine a plurality of functional modules shown in FIG. 7, or split one function module shown in FIG. 7 into a plurality of functional modules. This is not limited in this application.

The implementations of this application may be randomly combined to achieve different technical effect.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the procedures of the methods in embodiments may be implemented by a computer program instructing related hardware. The program may be stored in a computer-readable storage medium. When the program is executed, the procedures in the method embodiments may be performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A network connection method, applied to a first electronic device, wherein the method comprises:
establishing a Wi-Fi connection to a network connection device by using a wireless fidelity Wi-Fi module; and
disabling the Wi-Fi module when it is detected that a quantity of occurrences of wake-up events in a first time period is greater than a first quantity of times, and the first electronic device is in a low power mode, wherein the wake-up event is an event that when the first electronic device receives a data packet through the Wi-Fi connection, an interrupt controller is triggered to wake up the first electronic device from a sleep state to a working state.

2. The method according to claim 1, wherein the sleep state of the first electronic device is a state in which the first electronic device stops supplying power to a central processing unit CPU of the first electronic device, and the working state of the first electronic device is a state in which the first electronic device supplies power to the CPU.

3. The method according to claim 1 or 2, wherein the method further comprises:
disabling the Wi-Fi module when it is detected that the first electronic device remains screen-off and is not worn by a user for first duration, and the first electronic device is in the low power mode.

4. The method according to any one of claims 1 to 3, wherein the method further comprises:
disabling the Wi-Fi module when it is detected that wake lock duration of the Wi-Fi module reaches second duration, and the first electronic device is in the low power mode.

5. The method according to any one of claims 1 to 4, wherein the detection that the first electronic device is in the low power mode specifically comprises:
detecting that a power level of the first electronic device is less than a power level threshold; or
detecting that the first electronic device is in a screen-off state; or
detecting that the first electronic device does not execute a service or a service that is being executed is not a perceptible service, wherein the perceptible service comprises a download service, a music service, a video service, a call service, and a network keepalive service applied by an application in a first list.

6. The method according to any one of claims 1 to 5, wherein after disabling the Wi-Fi module, the method further comprises:
enabling the Wi-Fi module when it is detected that an enabling condition is met; and
the enabling condition comprises any one or more of the following:
the first electronic device is in a charging state and the power level is greater than the power level threshold, an application in the first list applies for the network keepalive service, an operation performed by a user on a key is received, the first electronic device is in a screen-on state and receives a touch operation of a user, or an operation of pulling down a shortcut menu by a user is received.

7. The method according to any one of claims 1 to 6, wherein the method further comprises:
when the Wi-Fi connection to the network connection device is established by using the Wi-Fi module, establishing a communication connection to the second electronic device, wherein the second electronic device is used for communication between the first electronic device and a third electronic device; and
disabling the Wi-Fi module after the communication connection to the second electronic device is established.

8. The method according to claim 7, wherein the communication connection between the first electronic device and the second electronic device comprises: a Bluetooth connection, a near field communication NFC connection, and an infrared IR connection.

9. The method according to claim 7 or 8, wherein disabling the Wi-Fi module after the communication connection to the second electronic device is established specifically comprises:
after the communication connection to the second electronic device is established, receiving network connection information sent by the second electronic device, wherein the network connection information comprises any one or more of the following: a network status, an operating system identifier, or a power status; and
disabling the Wi-Fi module when it is determined, based on the network connection information, that the second electronic device supports the first electronic device in communicating with the third electronic device through the second electronic device.

10. The method according to claim 7 or 8, wherein disabling the Wi-Fi module after the communication connection to the second electronic device is established specifically comprises:
after the communication connection to the second electronic device is established, receiving a first notification sent by the second electronic device, wherein the first notification indicates that the second electronic device supports the first electronic device in communicating with the third electronic device through the second electronic device; and
disabling the Wi-Fi module after the first notification is received.

11. The method according to any one of claims 7 to 10, wherein the method further comprises:
after the communication connection to the second electronic device is established and the Wi-Fi module is disabled, detecting that a network data transmission speed between the first electronic device and the second electronic device is lower than a first speed; and
enabling the Wi-Fi module.

12. The method according to any one of claims 7 to 10, wherein the method further comprises:
after the communication connection to the second electronic device is established and the Wi-Fi module is disabled, receiving a second notification sent by the second electronic device, wherein the second notification indicates that the second electronic device does not support the first electronic device in communicating with the third electronic device through the second electronic device; and
enabling the Wi-Fi module after the second notification is received.

13. The method according to any one of claims 7 to 9, wherein the method further comprises:
after the Wi-Fi module is disabled, sending a first request for a first service to the second electronic device, wherein the first request comprises a first address, and the first request is used to request the second electronic device to obtain first data based on the first address;
receiving a third notification sent by the second electronic device, wherein the third notification indicates that the second electronic device cannot obtain the first data;
enabling the Wi-Fi module after the third notification is received;
establishing the Wi-Fi connection to the network connection device by using the Wi-Fi module; and
obtaining the first data based on the first address through the Wi-Fi connection.

14. The method according to claim 13, wherein enabling the Wi-Fi module after the third notification is received specifically comprises:
after the third notification is received, enabling the Wi-Fi module when it is detected that a priority of the first service is greater than or equal to a priority threshold.

15. The method according to any one of claims 1 to 5, wherein the method further comprises:
after the Wi-Fi module is disabled, establishing a communication connection to a second electronic device; and
sending data to a third electronic device through the second electronic device, or receiving, through the second electronic device, data sent by the third electronic device.

16. An electronic device, wherein the electronic device is a first electronic device and comprises one or more processors and one or more memories, the one or more memories are coupled to the one or more processors, the one or more memories are configured to store computer program code, the computer program code comprises computer instructions, and when the one or more processors execute the computer instructions, the first electronic device is enabled to perform the method according to any one of claims 1 to 15.

17. A computer-readable storage medium, comprising computer instructions, wherein when the computer instructions are run on a first electronic device, the first electronic device is enabled to perform the method according to any one of claims 1 to 15.
